# EUROPEAN PATENT APPLICATION

(11) **EP 4 796 982 A1**
(43) Date of publication of application: **26.08.2026**
(21) Application number: 26154719.4
(22) Date of filing: 28.01.2026
(51) Int. Cl.: G02C 7/02, G02C 7/04, G02C 7/06

(54) **OPHTHALMIC LENS**

(30) Priority: 25.02.2025 TW 114106976
(71) Applicant: Yung Sheng Optical Co., Ltd., Daya Dist. Taichung City 428 (TW)
(72) Inventor: TSAI, Tsung-Min, 428 Taichung City (TW)
(74) Representative: Viering, Jentschura & Partner mbB Patent- und Rechtsanwälte

(57) **Abstract**

An ophthalmic lens (100-500) includes a central optical area (10), a first annular optical area (20) surrounding the central optical area (10), a second annular optical area (30) surrounding the first annular optical area (20), and a third annular optical area (40) surrounding the second annular optical area (30). The ophthalmic lens (100-500) is defined with two first refractive correction areas (Al-A5), a second refractive correction area (B1-B5), and a third refractive correction area (C1-C5). The two first refractive correction areas (Al-A5), the second refractive correction area (B1-B5), and the third refractive correction area (C1-C5) are selectively disposed in any of the central optical area (10), the first annular optical area (20), the second annular optical area (30), and the third annular optical area (40), thereby increasing a diversity of a dioptric power profile of the ophthalmic lens (100-500).

## Description

### BACKGROUND OF THE INVENTION

### Technical Field

The present invention relates generally to an ophthalmic lens, and more particularly to a multifocal ophthalmic lens.

### Description of Related Art

With a prevalence of the 3C products, an age of onset of myopia among the children and the adolescents becomes younger, so that the patients suffering from high myopia become more. Vision problems includes not only myopia and hyperopia but also myopic astigmatism and hyperopic astigmatism. When a light passes through a cornea and is focused at a retina, a clear image could be formed at the retina. However, when the light is focused at multifocal points instead of a single focal point, astigmatism is formed, thereby causing an image distortion and an optical blur, etc. Therefore, a vision quality is seriously affected.

To conventionally correct the vision, ophthalmic lenses are used such as contact lenses. Because a dioptric power profile of the ophthalmic lens with a multifocal vision correction is provided with a dioptric power gradually increasing from a central area to a peripheral area, a user wearing the ophthalmic lens tends to feel uncomfortable, especially the user wears the ophthalmic lens for a longer time, thereby reducing a vision control.

### BRIEF SU MMARY OF THE INVENTION

In view of the above, the primary objective of the present invention is to provide an ophthalmic lens, which is provided with a multifocal power profile. The multifocal power profile could be arranged upon the required demand for a vision correction, thereby relieving eyestrain. Therefore, a user could easily wear the ophthalmic lens with a clear vision.

The present invention provides an ophthalmic lens including a central optical area, a first annular optical area, a second annular optical area, and a third annular optical area, wherein the central optical area has a center point. The first annular optical area surrounds the central optical area. The second annular optical area surrounds the first annular optical area. The third annular optical area surrounds the second annular optical area. The ophthalmic lens is defined with two first refractive correction areas, a second refractive correction area, and a third refractive correction area, wherein the two first refractive correction areas, the second refractive correction area, and the third refractive correction area are selectively disposed in any of the central optical area, the first annular optical area, the second annular optical area, and the third annular optical area. The ophthalmic lens has a dioptric power profile, wherein the dioptric power profile presents a horizontal line in each of the two first refractive correction areas. The dioptric power profile presents a wavy curve in the second refractive correction area and the third refractive correction area. The dioptric power profile has at least one peak in each of the second refractive correction area and the third refractive correction area. The ophthalmic lens satisfies: 3.5 mm≤Z1+Z2+Z3+Z4≤5.0 mm, wherein Z1 is a distance between the center point and a boundary of the central optical area. Z2 is a distance between the boundary of the central optical area and a boundary of the first annular optical area. Z3 is a distance between the boundary of the first annular optical area and a boundary of the second annular optical area. Z4 is a distance between the boundary of the second annular optical area and a boundary of the third annular optical area.

With the aforementioned design, through the multifocal power profile of the ophthalmic lens, eyestrain of the user could be relieved, and the user could easily wear the ophthalmic lens with the clear vision. In addition, the ophthalmic lens could be provided with the two first refractive correction areas, the second refractive correction area, and the third refractive correction area selectively disposed in any of the central optical area, the first annular optical area, the second annular optical area, and the third annular optical area upon the required demand for the vision correction. The dioptric power profile is adjusted in each of the two first refractive correction areas, the second refractive correction area, and the third refractive correction area, thereby increasing a diversity of the dioptric power profile of the ophthalmic lens.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1A is a schematic view of the ophthalmic lens according to a first embodiment of the present invention;
FIG. 1B is a curve diagram of the dioptric power profile of the ophthalmic lens according to the first embodiment of the present invention;
FIG. 2 is a curve diagram of the dioptric power profile of the ophthalmic lens according to a second embodiment of the present invention;
FIG. 3 is a curve diagram of the dioptric power profile of the ophthalmic lens according to a third embodiment of the present invention;
FIG. 4 is a curve diagram of the dioptric power profile of the ophthalmic lens according to a fourth embodiment of the present invention; and
FIG. 5 is a curve diagram of the dioptric power profile of the ophthalmic lens according to a fifth embodiment of the present invention.

### DETAILED DESCRIPTION OF THE INVENTION

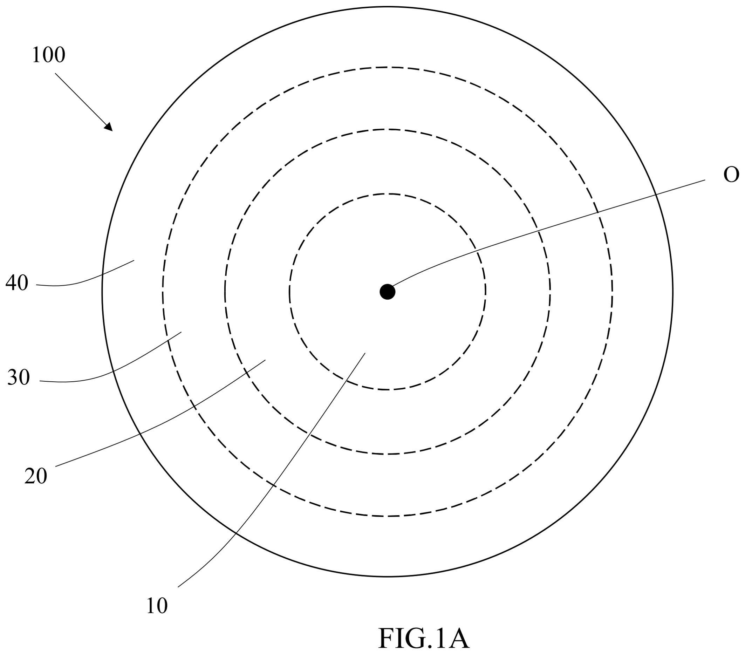

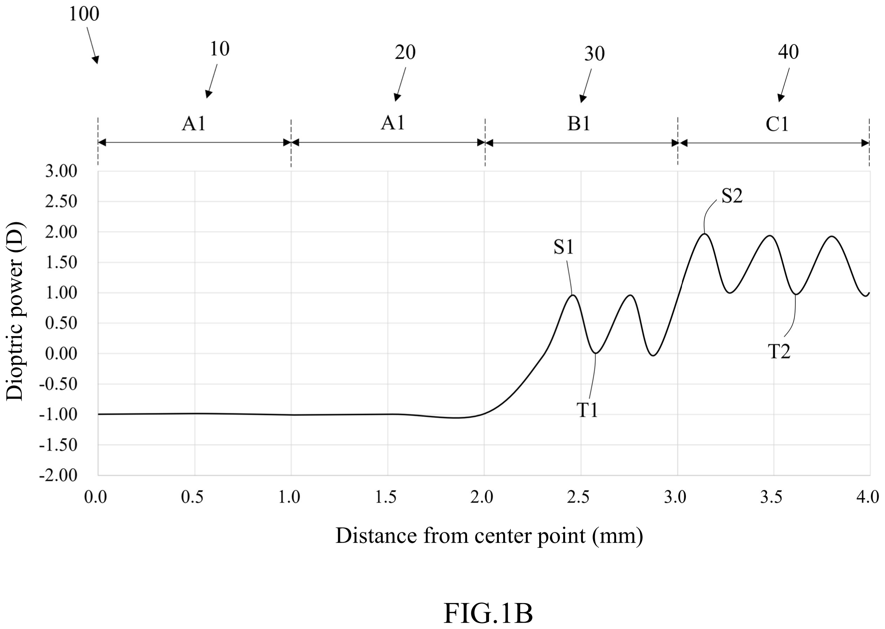

An ophthalmic lens 100 according to a first embodiment of the present invention is illustrated in FIG. 1A and FIG. 1B and includes a central optical area 10, a first annular optical area 20, a second annular optical area 30, and a third annular optical area 40. In the first embodiment, the ophthalmic lens 100 is a contact lens as illustration, but not limited thereto.

The central optical area 10 has a center point O. The first annular optical area 20 surrounds the central optical area 10. The second annular optical area 30 surrounds the first annular optical area 20. The third annular optical area 40 surrounds the second annular optical area 30. In the first embodiment, the first annular optical area 20, the second annular optical area 30, and the third annular optical area 40 are concentric and are centered at the center point O.

The ophthalmic lens 100 is defined with two first refractive correction areas A1, a second refractive correction area B1, and a third refractive correction area C1, wherein the two first refractive correction areas A1, the second refractive correction area B1, and the third refractive correction area C1 are selectively disposed in any of the central optical area 10, the first annular optical area 20, the second annular optical area 30, and the third annular optical area 40. In other words, the ophthalmic lens 100 is provided with the two first refractive correction areas A1, the second refractive correction area B1, and the third refractive correction area C1 selectively disposed in any of the central optical area 10, the first annular optical area 20, the second annular optical area 30, and the third annular optical area 40 upon the required demand for a vision correction, and the two first refractive correction areas A1, the second refractive correction area B1, and the third refractive correction area C1 could be sequentially disposed in the central optical area 10, the first annular optical area 20, the second annular optical area 30, and the third annular optical area 40, but not limited thereto.

In an embodiment, the two first refractive correction areas A1 are respectively located in two of the central optical area 10, the first annular optical area 20, the second annular optical area 30, and the third annular optical area 40, and the second refractive correction area B1 and/or the third refractive correction area C1 are/is arranged between the two first refractive correction areas A1. In another embodiment, the two first refractive correction areas A1 are adjacently arranged and are respectively located in two of the central optical area 10, the first annular optical area 20, the second annular optical area 30, and the third annular optical area 40, and the second refractive correction area B1 or the third refractive correction area C1 is arranged on a side of one of the two first refractive correction areas A1. In still another embodiment, the two first refractive correction areas A1 are adjacently arranged and are respectively located in the first annular optical area 20 and the second annular optical area 30; the second refractive correction area B1 and the third refractive correction area C1 are respectively located in the central optical area 10 and the third annular optical area 40; the two first refractive correction areas A1 are arranged between the second refractive correction area B1 and the third refractive correction area C1. For example, the two first refractive correction areas A1, the second refractive correction area B1, and the third refractive correction area C1 of the ophthalmic lens 100 could be selectively disposed in the central optical area 10, the first annular optical area 20, the second annular optical area 30, and the third annular optical area 40 as listed in Table 1.

**Table 1**

| Optical area arrangement | Central optical area 10 | First annular optical area 20 | Second annular optical area 30 | Third annular optical area 40 |
|---|---|---|---|---|
| | First refractive correction area A1 | First refractive correction area A1 | Third refractive correction area C1 | Second refractive correction area B1 |
| Refractive correction area arrangement corresponding to optical area | First refractive correction area A1 | First refractive correction area A1 | Second refractive correction area B1 | Third refractive correction area C1 |
| | First refractive correction area A1 | Third refractive correction area C1 | Second refractive correction area B1 | First refractive correction area A1 |
| | First refractive correction area A1 | Second refractive correction area B1 | Third refractive correction area C1 | First refractive correction area A1 |
| | First refractive correction area A1 | Second refractive correction area B1 | First refractive correction area A1 | Third refractive correction area C1 |
| | First refractive correction area A1 | Third refractive correction area C1 | First refractive correction area A1 | Second refractive correction area B1 |
| | Second refractive correction area B1 | First refractive correction area A1 | First refractive correction area A1 | Third refractive correction area C1 |
| | Third refractive correction area C1 | First refractive correction area A1 | First refractive correction area A1 | Second refractive correction area B1 |
| | Second refractive correction area B1 | First refractive correction area A1 | Third refractive correction area C1 | First refractive correction area A1 |
| | Third refractive correction area C1 | First refractive correction area A1 | Second refractive correction area B1 | First refractive correction area A1 |
| | Second refractive correction area B1 | Third refractive correction area C1 | First refractive correction area A1 | First refractive correction area A1 |
| | Third refractive correction area C1 | Second refractive correction area B1 | First refractive correction area A1 | First refractive correction area A1 |

The ophthalmic lens 100 has a dioptric power profile. Referring to a curve diagram of the dioptric power profile of the ophthalmic lens 100 in FIG. 1B, in the first embodiment, the two first refractive correction areas A1 are adjacently located in the central optical area 10 and the first annular optical area 20. The second refractive correction area B1 is located in the second annular optical area 30. The third refractive correction area C1 is located in the third annular optical area 40. The dioptric power profile presents a horizontal line in each of the two first refractive correction areas A1. The dioptric power profile presents a wavy curve varying continuously in the second refractive correction area B1 and the third refractive correction area C1. A plurality of peaks are formed in each of the second refractive correction area B1 and the third refractive correction area C1. More specifically, the dioptric power profile has a plurality of first peaks S1 and a plurality of first valleys T1 in the second refractive correction area B1. The dioptric power profile has a plurality of second peaks S2 and a plurality of second valleys T2 in the third refractive correction area C1. In other embodiments, the dioptric power profile has at least one peak in each of the second refractive correction area B1 and the third refractive correction area C1.

In the first embodiment, to ensure that the ophthalmic lens 100 could achieve a great vision correction effect, the ophthalmic lens 100 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 3.00 D \leq PPSD - PPS 1 \leq 3.00 D ;$
(8) $- 4.00 D \leq PPS 1 - PPS 2 \leq 4.00 D ;$
(9) $1.00 D \leq \left|PPS1-PPT1\right| \leq 4.00 D ;$
(10) $1.00 D \leq \left|PPS2-PPT2\right| \leq 4.00 D .$

Z1 is a distance between the center point O and a boundary of the central optical area 10. The boundary of the central optical area 10 is an intersection between the central optical area 10 and the first annular optical area 20. The center point O is an initial point of the dioptric power profile. Z2 is a distance between the boundary of the central optical area 10 and a boundary of the first annular optical area 20. The boundary of the first annular optical area 20 is an intersection between the first annular optical area 20 and the second annular optical area 30. Z3 is a distance between the boundary of the first annular optical area 20 and a boundary of the second annular optical area 30. The boundary of the second annular optical area 30 is an intersection between the second annular optical area 30 and the third annular optical area 40. Z4 is a distance between the boundary of the second annular optical area 30 and a boundary of the third annular optical area 40. The boundary of the third annular optical area 40 is an outer peripheral edge of the ophthalmic lens 100. PPSD is a dioptric power of each of the two first refractive correction areas A1. PPS1 is a peak dioptric power of each of the first peaks S1 in the second refractive correction area B1. PPT1 is a valley dioptric power of each of the first valleys T1 in the second refractive correction area B1. In the first embodiment, PPS1 is defined as the peak dioptric power of the highest of the first peaks S1 in the second refractive correction area B1, and PPT1 is defined as the valley dioptric power of the lowest of the first valleys T1 in the second refractive correction area B1. PPS2 is a peak dioptric power of each of the second peaks S2 in the third refractive correction area C1. PPT2 is a valley dioptric power of each of the second valleys T2 in the third refractive correction area C1. In the first embodiment, PPS2 is defined as the peak dioptric power of the highest of the second peaks S2 in the third refractive correction area C1, and PPT2 is defined as the valley dioptric power of the lowest of the second valleys T2 in the third refractive correction area C1.

It could be seen from FIG. 1B that, in the first embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of each of the two first refractive correction areas A1 is -1.00 D. The peak dioptric power PPS1 of the second refractive correction area B1 is 1.00 D. The valley dioptric power PPT1 of the second refractive correction area B1 is 0.00 D. The peak dioptric power PPS2 of the third refractive correction area C1 is 2.00 D. The valley dioptric power PPT2 of the third refractive correction area C1 is 1.00 D.

Therefore, based on detailed values of the aforementioned dioptric power profile, detailed values of the aforementioned conditions of the ophthalmic lens 100 in the first embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = - 2.00 D ;$
(8) $PPS 1 - PPS 2 = - 1.00 D ;$
(9) $\left|PPS1-PPT1\right| = 1.00 D ;$
(10) $\left|PPS2-PPT2\right| = 1.00 D .$

Therefore, in the first embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, and the valley dioptric power PPT2 satisfy the aforementioned conditions (1) to (10) of the ophthalmic lens 100. In addition, in the first embodiment, the dioptric power of the ophthalmic lens 100 gradually increases in one of the two first refractive correction areas A1, the second refractive correction area B1, and the third refractive correction area C1 in order of the first annular optical area 20, the second annular optical area 30, and the third annular optical area 40. A difference | PPS1-PPT1 | between the peak dioptric power of the second refractive correction area B1 and the valley dioptric power of the second refractive correction area B1 is identical to a difference | PPS2-PPT2 | between the peak dioptric power of the third refractive correction area C1 and the valley dioptric power of the third refractive correction area C1. Therefore, through a multifocal power profile of the ophthalmic lens 100 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 100 with a clear vision.

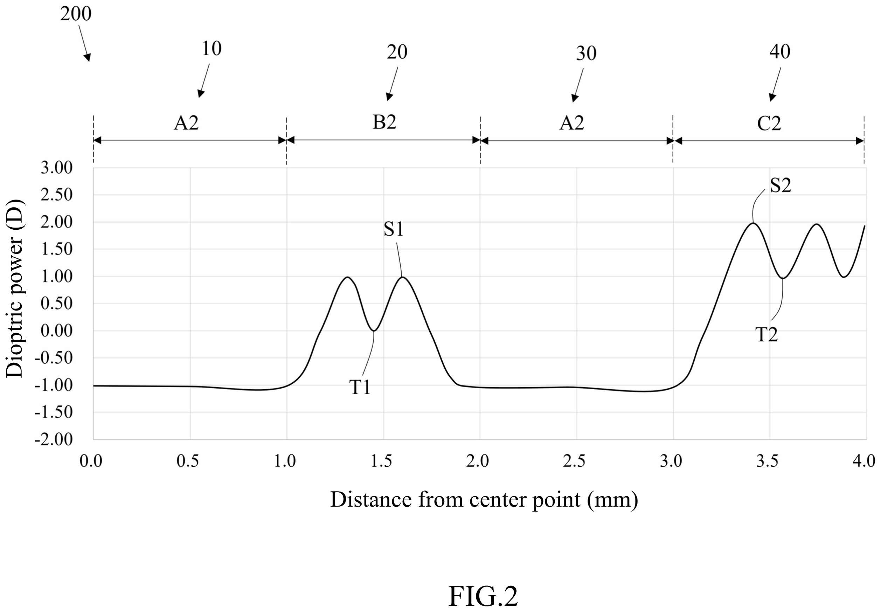

An ophthalmic lens 200 according to a second embodiment of the present invention is illustrated in FIG. 2 and includes a central optical area 10, a first annular optical area 20, a second annular optical area 30, and a third annular optical area 40. The central optical area 10, the first annular optical area 20, the second annular optical area 30, and the third annular optical area 40 of the second embodiment are identical to the central optical area 10, the first annular optical area 20, the second annular optical area 30, and the third annular optical area 40 of the first embodiment. In other words, in the second embodiment, the first annular optical area 20, the second annular optical area 30, and the third annular optical area 40 sequentially surround the central optical area 10.

The ophthalmic lens 200 is defined with two first refractive correction areas A2, a second refractive correction area B2, and a third refractive correction area C2, wherein the two first refractive correction areas A2, the second refractive correction area B2, and the third refractive correction area C2 are selectively disposed in any of the central optical area 10, the first annular optical area 20, the second annular optical area 30, and the third annular optical area 40. The ophthalmic lens 200 has a dioptric power profile. Referring to a curve diagram of the dioptric power profile of the ophthalmic lens 200 in FIG. 2, in the second embodiment, the two first refractive correction areas A2 are respectively located in the central optical area 10 and the second annular optical area 30. The second refractive correction area B2 is located in the first annular optical area 20. The third refractive correction area C2 is located in the third annular optical area 40. The dioptric power profile presents a horizontal line in each of the two first refractive correction areas A2. The dioptric power profile presents a wavy curve varying continuously in the second refractive correction area B2 and the third refractive correction area C2. A plurality of peaks are formed in each of the second refractive correction area B2 and the third refractive correction area C2. More specifically, the dioptric power profile has a plurality of first peaks S1 and a plurality of first valleys T1 in the second refractive correction area B2. The dioptric power profile has a plurality of second peaks S2 and a plurality of second valleys T2 in the third refractive correction area C2. In other embodiments, the dioptric power profile has at least one peak in each of the second refractive correction area B2 and the third refractive correction area C2.

In the second embodiment, to ensure that the ophthalmic lens 200 could achieve a great vision correction effect, the ophthalmic lens 200 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 3.00 D \leq PPSD - PPS 1 \leq 3.00 D ;$
(8) $- 4.00 D \leq PPS 1 - PPS 2 \leq 4.00 D ;$
(9) $1.00 D \leq \left|PPS1-PPT1\right| \leq 4.00 D ;$
(10) $1.00 D \leq \left|PPS2-PPT2\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of each of the two first refractive correction areas A2. PPS1 is a peak dioptric power of each of the first peaks S1 in the second refractive correction area B2. PPT1 is a valley dioptric power of each of the first valleys T1 in the second refractive correction area B2. In the second embodiment, PPS1 is defined as the peak dioptric power of the highest of the first peaks S1 in the second refractive correction area B2, and PPT1 is defined as the valley dioptric power of the lowest of the first valleys T1 in the second refractive correction area B2. PPS2 is a peak dioptric power of each of the second peaks S2 in the third refractive correction area C2. PPT2 is a valley dioptric power of each of the second valleys T2 in the third refractive correction area C2. In the second embodiment, PPS2 is defined as the peak dioptric power of the highest of the second peaks S2 in the third refractive correction area C2, and PPT2 is defined as the valley dioptric power of the lowest of the second valleys T2 in the third refractive correction area C2.

It could be seen from FIG. 2 that, in the second embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of each of the two first refractive correction areas A2 is -1.00 D. The peak dioptric power PPS1 of the second refractive correction area B2 is 1.00 D. The valley dioptric power PPT1 of the second refractive correction area B2 is 0.00 D. The peak dioptric power PPS2 of the third refractive correction area C2 is 2.00 D. The valley dioptric power PPT2 of the third refractive correction area C2 is 1.00 D.

Therefore, based on detailed values of the aforementioned dioptric power profile, detailed values of the aforementioned conditions of the ophthalmic lens 200 in the second embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = - 2.00 D ;$
(8) $PPS 1 - PPS 2 = - 1.00 D ;$
(9) $\left|PPS1-PPT1\right| = 1.00 D ;$
(10) $\left|PPS2-PPT2\right| = 1.00 D .$

Therefore, in the second embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, and the valley dioptric power PPT2 satisfy the aforementioned conditions (1) to (10) of the ophthalmic lens 200. In addition, in the second embodiment, the second refractive correction area B2 is located between the two first refractive correction areas A2. The third refractive correction area C2 is located on a side of one of the two first refractive correction areas A2. A dioptric power of the second refractive correction area B2 and a dioptric power of the third refractive correction area C2 are respectively greater than the dioptric power of each of the two first refractive correction areas A2. A difference | PPS1-PPT1 | between the peak dioptric power of the second refractive correction area B2 and the valley dioptric power of the second refractive correction area B2 is identical to a difference |PPS2-PPT2| between the peak dioptric power of the third refractive correction area C2 and the valley dioptric power of the third refractive correction area C2. Therefore, through a multifocal power profile of the ophthalmic lens 200 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 200 with a clear vision.

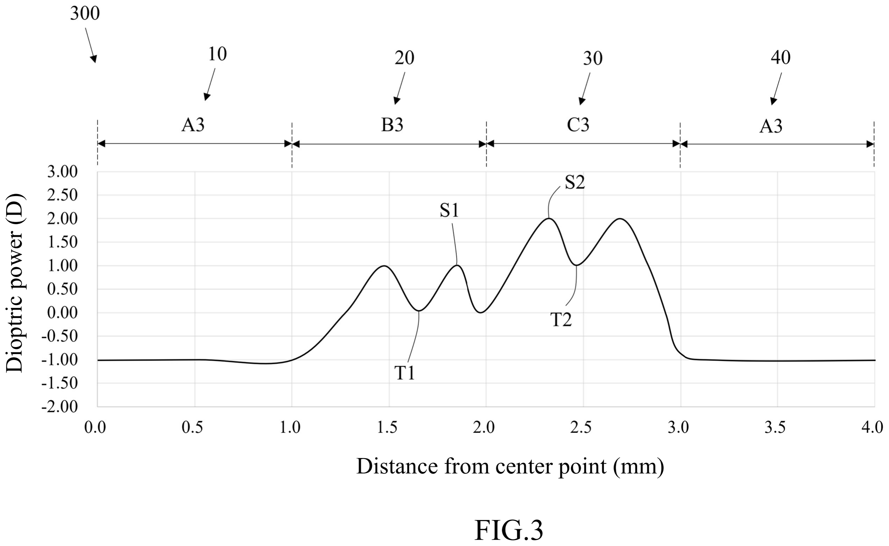

An ophthalmic lens 300 according to a third embodiment of the present invention is illustrated in FIG. 3 and includes a central optical area 10, a first annular optical area 20, a second annular optical area 30, and a third annular optical area 40. The central optical area 10, the first annular optical area 20, the second annular optical area 30, and the third annular optical area 40 of the third embodiment are identical to the central optical area 10, the first annular optical area 20, the second annular optical area 30, and the third annular optical area 40 of the first embodiment. In other words, in the third embodiment, the first annular optical area 20, the second annular optical area 30, and the third annular optical area 40 sequentially surround the central optical area 10.

The ophthalmic lens 300 is defined with two first refractive correction areas A3, a second refractive correction area B3, and a third refractive correction area C3, wherein the two first refractive correction areas A3, the second refractive correction area B3, and the third refractive correction area C3 are selectively disposed in any of the central optical area 10, the first annular optical area 20, the second annular optical area 30, and the third annular optical area 40. The ophthalmic lens 300 has a dioptric power profile. Referring to a curve diagram of the dioptric power profile of the ophthalmic lens 300 in FIG. 3, in the third embodiment, the two first refractive correction areas A3 are respectively located in the central optical area 10 and the third annular optical area 40. The second refractive correction area B3 is located in the first annular optical area 20. The third refractive correction area C3 is located in the second annular optical area 30. The dioptric power profile presents a horizontal line in each of the two first refractive correction areas A3. The dioptric power profile presents a wavy curve varying continuously in the second refractive correction area B3 and the third refractive correction area C3. A plurality of peaks are formed in each of the second refractive correction area B3 and the third refractive correction area C3. More specifically, the dioptric power profile has a plurality of first peaks S1 and a plurality of first valleys T1 in the second refractive correction area B3. The dioptric power profile has a plurality of second peaks S2 and a plurality of second valleys T2 in the third refractive correction area C3. In other embodiments, the dioptric power profile has at least one peak in each of the second refractive correction area B3 and the third refractive correction area C3.

In the third embodiment, to ensure that the ophthalmic lens 300 could achieve a great vision correction effect, the ophthalmic lens 300 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 3.00 D \leq PPSD - PPS 1 \leq 3.00 D ;$
(8) $- 4.00 D \leq PPS 1 - PPS 2 \leq 4.00 D ;$
(9) $1.00 D \leq \left|PPS1-PPT1\right| \leq 4.00 D ;$
(10) $1.00 D \leq \left|PPS2-PPT2\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of each of the two first refractive correction areas A3. PPS1 is a peak dioptric power of each of the first peaks S1 in the second refractive correction area B3. PPT1 is a valley dioptric power of each of the first valleys T1 in the second refractive correction area B3. In the third embodiment, PPS1 is defined as the peak dioptric power of the highest of the first peaks S1 in the second refractive correction area B3, and PPT1 is defined as the valley dioptric power of the lowest of the first valleys T1 in the second refractive correction area B3. PPS2 is a peak dioptric power of each of the second peaks S2 in the third refractive correction area C3. PPT2 is a valley dioptric power of each of the second valleys T2 in the third refractive correction area C3. In the third embodiment, PPS2 is defined as the peak dioptric power of the highest of the second peaks S2 in the third refractive correction area C3, and PPT2 is defined as the valley dioptric power of the lowest of the second valleys T2 in the third refractive correction area C3.

It could be seen from FIG. 3 that, in the third embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of each of the two first refractive correction areas A3 is -1.00 D. The peak dioptric power PPS1 of the second refractive correction area B3 is 1.00 D. The valley dioptric power PPT1 of the second refractive correction area B3 is 0.00 D. The peak dioptric power PPS2 of the third refractive correction area C3 is 2.00 D. The valley dioptric power PPT2 of the third refractive correction area C3 is 1.00 D.

Therefore, based on detailed values of the aforementioned dioptric power profile, detailed values of the aforementioned conditions of the ophthalmic lens 300 in the third embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PSS 1 = - 2.00 D ;$
(8) $PPS 1 - PPS 2 = - 1.00 D ;$
(9) $\left|PPS1-PPT1\right| = 1.00 D ;$
(10) $\left|PPS2-PPT2\right| = 1.00 D .$

Therefore, in the third embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, and the valley dioptric power PPT2 satisfy the aforementioned conditions (1) to (10) of the ophthalmic lens 300. In addition, in the third embodiment, the second refractive correction area B3 and the third refractive correction area C3 are located between the two first refractive correction areas A3. A dioptric power of the second refractive correction area B3 and a dioptric power of the third refractive correction area C3 are respectively greater than the dioptric power of each of the two first refractive correction areas A3. A difference |PPS1-PPT1| between the peak dioptric power of the second refractive correction area B3 and the valley dioptric power of the second refractive correction area B3 is identical to a difference |PPS2-PPT2| between the peak dioptric power of the third refractive correction area C3 and the valley dioptric power of the third refractive correction area C3. Therefore, through a multifocal power profile of the ophthalmic lens 300 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 300 with a clear vision.

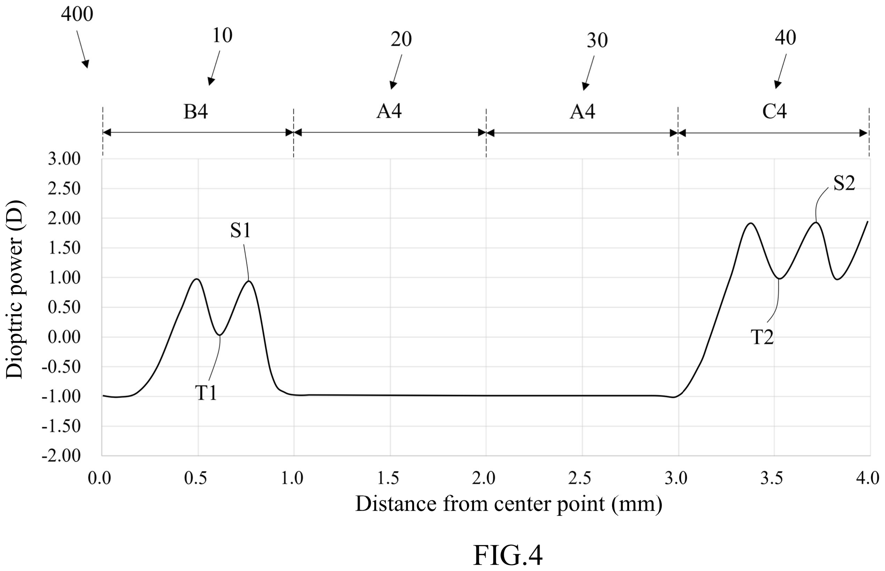

An ophthalmic lens 400 according to a fourth embodiment of the present invention is illustrated in FIG. 4 and includes a central optical area 10, a first annular optical area 20, a second annular optical area 30, and a third annular optical area 40. The central optical area 10, the first annular optical area 20, the second annular optical area 30, and the third annular optical area 40 of the fourth embodiment are identical to the central optical area 10, the first annular optical area 20, the second annular optical area 30, and the third annular optical area 40 of the first embodiment. In other words, in the fourth embodiment, the first annular optical area 20, the second annular optical area 30, and the third annular optical area 40 sequentially surround the central optical area 10.

The ophthalmic lens 400 is defined with two first refractive correction areas A4, a second refractive correction area B4, and a third refractive correction area C4, wherein the two first refractive correction areas A4, the second refractive correction area B4, and the third refractive correction area C4 are selectively disposed in any of the central optical area 10, the first annular optical area 20, the second annular optical area 30, and the third annular optical area 40. The ophthalmic lens 400 has a dioptric power profile. Referring to a curve diagram of the dioptric power profile of the ophthalmic lens 400 in FIG. 4, in the fourth embodiment, the two first refractive correction areas A4 are adjacently arranged and are respectively located in the first annular optical area 20 and the second annular optical area 30. The second refractive correction area B4 is located in the central optical area 10. The third refractive correction area C4 is located in the third annular optical area 40. The dioptric power profile presents a horizontal line in each of the two first refractive correction areas A4. The dioptric power profile presents a wavy curve varying continuously in the second refractive correction area B4 and the third refractive correction area C4. A plurality of peaks are formed in each of the second refractive correction area B4 and the third refractive correction area C4. More specifically, the dioptric power profile has a plurality of first peaks S1 and a plurality of first valleys T1 in the second refractive correction area B4. The dioptric power profile has a plurality of second peaks S2 and a plurality of second valleys T2 in the third refractive correction area C4. In other embodiments, the dioptric power profile has at least one peak in each of the second refractive correction area B4 and the third refractive correction area C4.

In the fourth embodiment, to ensure that the ophthalmic lens 400 could achieve a great vision correction effect, the ophthalmic lens 400 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 3.00 D \leq PPSD - PPS 1 \leq 3.00 D ;$
(8) $- 4.00 D \leq PPS 1 - PPS 2 \leq 4.00 D ;$
(9) $1.00 D \leq \left|PPS1-PPT1\right| \leq 4.00 D ;$
(10) $1.00 D \leq \left|PPS2-PPT2\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of each of the two first refractive correction areas A4. PPS1 is a peak dioptric power of each of the first peaks S1 in the second refractive correction area B4. PPT1 is a valley dioptric power of each of the first valleys T1 in the second refractive correction area B4. In the fourth embodiment, PPS1 is defined as the peak dioptric power of the highest of the first peaks S1 in the second refractive correction area B4, and PPT1 is defined as the valley dioptric power of the lowest of the first valleys T1 in the second refractive correction area B4. PPS2 is a peak dioptric power of each of the second peaks S2 in the third refractive correction area C4. PPT2 is a valley dioptric power of each of the second valleys T2 in the third refractive correction area C4. In the fourth embodiment, PPS2 is defined as the peak dioptric power of the highest of the second peaks S2 in the third refractive correction area C4, and PPT2 is defined as the valley dioptric power of the lowest of the second valleys T2 in the third refractive correction area C4.

It could be seen from FIG. 4 that, in the fourth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of each of the two first refractive correction areas A4 is -1.00 D. The peak dioptric power PPS1 of the second refractive correction area B4 is 1.00 D. The valley dioptric power PPT1 of the second refractive correction area B4 is 0.00 D. The peak dioptric power PPS2 of the third refractive correction area C4 is 2.00 D. The valley dioptric power PPT2 of the third refractive correction area C4 is 1.00 D.

Therefore, based on detailed values of the aforementioned dioptric power profile, detailed values of the aforementioned conditions of the ophthalmic lens 400 in the fourth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
(5) $Z 4 = 1.0 mm ;$
(6) $PPSD = - 1.00 D ;$
(7) $PPSD - PPS 1 = - 2.00 D ;$
(8) $PPS 1 - PPS 2 = - 1.00 D ;$
(9) $\left|PPS1-PPT1\right| = 1.00 D ;$
(10) $\left|PPS2-PPT2\right| = 1.00 D .$

Therefore, in the fourth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, and the valley dioptric power PPT2 satisfy the aforementioned conditions (1) to (10) of the ophthalmic lens 400. In addition, in the fourth embodiment, the two first refractive correction areas A4 are adjacently arranged between the second refractive correction area B4 and the third refractive correction area C4. A dioptric power of the second refractive correction area B4 and a dioptric power of the third refractive correction area C4 are respectively greater than the dioptric power of each of the two first refractive correction areas A4. A difference |PPS1-PPT1| between the peak dioptric power of the second refractive correction area B4 and the valley dioptric power of the second refractive correction area B4 is identical to a difference |PPS2-PPT2| between the peak dioptric power of the third refractive correction area C4 and the valley dioptric power of the third refractive correction area C4. Therefore, through a multifocal power profile of the ophthalmic lens 400 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 400 with a clear vision.

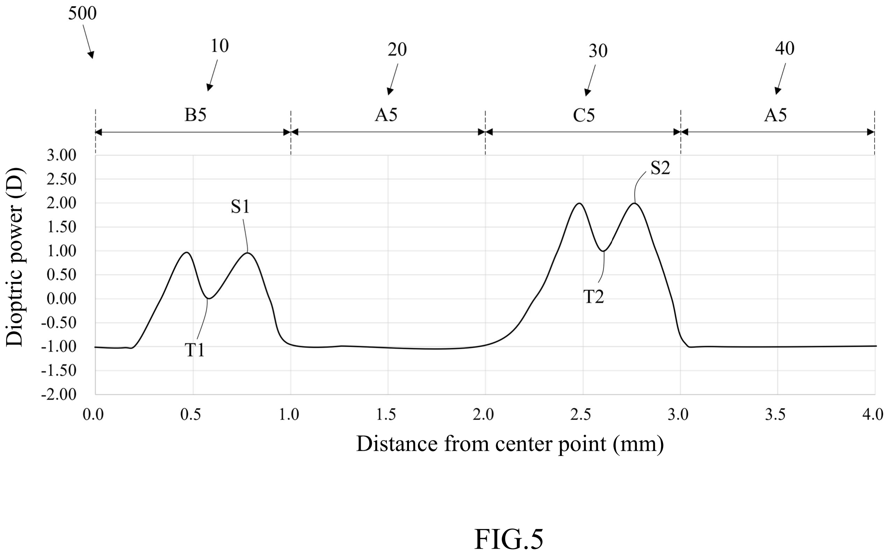

An ophthalmic lens 500 according to a fifth embodiment of the present invention is illustrated in FIG. 5 and includes a central optical area 10, a first annular optical area 20, a second annular optical area 30, and a third annular optical area 40. The central optical area 10, the first annular optical area 20, the second annular optical area 30, and the third annular optical area 40 of the fifth embodiment are identical to the central optical area 10, the first annular optical area 20, the second annular optical area 30, and the third annular optical area 40 of the first embodiment. In other words, in the fifth embodiment, the first annular optical area 20, the second annular optical area 30, and the third annular optical area 40 sequentially surround the central optical area 10.

The ophthalmic lens 500 is defined with two first refractive correction areas A5, a second refractive correction area B5, and a third refractive correction area C5, wherein the two first refractive correction areas A5, the second refractive correction area B5, and the third refractive correction area C5 are selectively disposed in any of the central optical area 10, the first annular optical area 20, the second annular optical area 30, and the third annular optical area 40. The ophthalmic lens 500 has a dioptric power profile. Referring to a curve diagram of the dioptric power profile of the ophthalmic lens 500 in FIG.5, in the fifth embodiment, the two first refractive correction areas A5 are respectively located in the first annular optical area 20 and the third annular optical area 40. The second refractive correction area B5 is located in the central optical area 10. The third refractive correction area C5 is located in the second annular optical area 30. The dioptric power profile presents a horizontal line in each of the two first refractive correction areas A5. The dioptric power profile presents a wavy curve varying continuously in the second refractive correction area B5 and the third refractive correction area C5. A plurality of peaks are formed in each of the second refractive correction area B5 and the third refractive correction area C5. More specifically, the dioptric power profile has a plurality of first peaks S1 and a plurality of first valleys T1 in the second refractive correction area B5. The dioptric power profile has a plurality of second peaks S2 and a plurality of second valleys T2 in the third refractive correction area C5. In other embodiments, the dioptric power profile has at least one peak in each of the second refractive correction area B5 and the third refractive correction area C5.

In the fifth embodiment, to ensure that the ophthalmic lens 500 could achieve a great vision correction effect, the ophthalmic lens 500 satisfies:
(1) $3.5 mm \leq Z 1 + Z 2 + Z 3 + Z 4 \leq 5.0 mm ;$
(2) $0.25 mm \leq Z 1 \leq 1.4 mm ;$
(3) $0.25 mm \leq Z 2 \leq 1.4 mm ;$
(4) $0.25 mm \leq Z 3 \leq 1.4 mm ;$
(5) $0.25 mm \leq Z 4 \leq 1.4 mm ;$
(6) $- 1.00 D \leq PPSD \leq 1.00 D ;$
(7) $- 3.00 D \leq PPSD - PPSI \leq 3.00 D ;$
(8) $- 4.00 D \leq PPS 1 - PPS 2 \leq 4.00 D ;$
(9) $1.00 D \leq \left|PPS1-PPT1\right| \leq 4.00 D ;$
(10) $1.00 D \leq \left|PPS2-PPT2\right| \leq 4.00 D .$

Z1 is a distance between the center point O and a boundary of the central optical area 10. Z2 is a distance between the boundary of the central optical area 10 and a boundary of the first annular optical area 20. Z3 is a distance between the boundary of the first annular optical area 20 and a boundary of the second annular optical area 30. Z4 is a distance between the boundary of the second annular optical area 30 and a boundary of the third annular optical area 40. PPSD is a dioptric power of each of the two first refractive correction areas A5. PPS1 is a peak dioptric power of each of the first peaks S1 in the second refractive correction area B5. PPT1 is a valley dioptric power of each of the first valleys T1 in the second refractive correction area B5. In the fifth embodiment, PPS1 is defined as the peak dioptric power of the highest of the first peaks S1 in the second refractive correction area B5, and PPT1 is defined as the valley dioptric power of the lowest of the first valleys T1 in the second refractive correction area B5. PPS2 is a peak dioptric power of each of the second peaks S2 in the third refractive correction area C5. PPT2 is a valley dioptric power of each of the second valleys T2 in the third refractive correction area C5. In the fifth embodiment, PPS2 is defined as the peak dioptric power of the highest of the second peaks S2 in the third refractive correction area C5, and PPT2 is defined as the valley dioptric power of the lowest of the second valleys T2 in the third refractive correction area C5.

It could be seen from FIG. 5 that, in the fifth embodiment, the distance Z1 between the center point O and the boundary of the central optical area 10 is 1.0 mm. The distance Z2 between the boundary of the central optical area 10 and the boundary of the first annular optical area 20 is 1.0 mm. The distance Z3 between the boundary of the first annular optical area 20 and the boundary of the second annular optical area 30 is 1.0 mm. The distance Z4 between the boundary of the second annular optical area 30 and the boundary of the third annular optical area 40 is 1.0 mm. A total distance Z1+Z2+Z3+Z4 between the center point O of the central optical area 10 and the boundary of the third annular optical area 40 is 4.0 mm. The dioptric power PPSD of each of the two first refractive correction areas A5 is -1.00 D. The peak dioptric power PPS1 of the second refractive correction area B5 is 1.00 D. The valley dioptric power PPT1 of the second refractive correction area B5 is 0.00 D. The peak dioptric power PPS2 of the third refractive correction area C5 is 2.00 D. The valley dioptric power PPT2 of the third refractive correction area C5 is 1.00 D.

Therefore, based on detailed values of the aforementioned dioptric power profile, detailed values of the aforementioned conditions of the ophthalmic lens 500 in the fifth embodiment are as follows:
(1) $Z 1 + Z 2 + Z 3 + Z 4 = 4.0 mm ;$
(2) $Z 1 = 1.0 mm ;$
(3) $Z 2 = 1.0 mm ;$
(4) $Z 3 = 1.0 mm ;$
*(5)* $Z 4 = 1.0 mm ;$
(6) $PPSD = - 1.00 D ;$
(7) $PPSD - PPS 1 = - 2.00 D ;$
(8) $PPS 1 - PPS 2 = - 1.00 D ;$
(9) $\left|PPS1-PPT1\right| = 1.00 D ;$
(10) $\left|PPS2-PPT2\right| = 1.00 D .$

Therefore, in the fifth embodiment, the total distance Z1+Z2+Z3+Z4, the distance Z1, the distance Z2, the distance Z3, the distance Z4, the dioptric power PPSD, the peak dioptric power PPS1, the valley dioptric power PPT1, the peak dioptric power PPS2, and the valley dioptric power PPT2 satisfy the aforementioned conditions (1) to (10) of the ophthalmic lens 500. In addition, in the fifth embodiment, one of the two first refractive correction areas A5 is located between the second refractive correction area B5 and the third refractive correction area C5. The other first refractive correction area A5 is located on a side of the third refractive correction area C5. A dioptric power of the second refractive correction area B5 and a dioptric power of the third refractive correction area C5 are respectively greater than the dioptric power of each of the two first refractive correction areas A5. A difference |PPS1-PPT1| between the peak dioptric power of the second refractive correction area B5 and the valley dioptric power of the second refractive correction area B5 is identical to a difference |PPS2-PPT2| between the peak dioptric power of the third refractive correction area C5 and the valley dioptric power of the third refractive correction area C5. Therefore, through a multifocal power profile of the ophthalmic lens 500 and reducing a dioptric power difference between any two adjacent ones of the central optical area 10, the first annular optical area 20, the second annular optical area 30, and the third annular optical area 40, eyestrain of a user could be relieved and the user could easily wear the ophthalmic lens 500 with a clear vision.

With the aforementioned design, through the multifocal power profile of the ophthalmic lens of the first embodiment to the fifth embodiment and reducing the dioptric power difference between any two adjacent ones of the central optical area, the first annular optical area, the second annular optical area, and the third annular optical area, eyestrain of the user could be relieved and the user could easily wear the ophthalmic lens of the first embodiment to the fifth embodiment with the clear vision. In addition, the ophthalmic lens of the first embodiment to the fifth embodiment could be provided with the two first refractive correction areas, the second refractive correction area, and the third refractive correction area selectively disposed in any of the central optical area, the first annular optical area, the second annular optical area, and the third annular optical area upon the required demand for the vision correction. The dioptric power profile is adjusted in each of the two first refractive correction areas, the second refractive correction area, and the third refractive correction area, thereby increasing a diversity of the dioptric power profile of the ophthalmic lens of the first embodiment to the fifth embodiment.

## Claims

1. An ophthalmic lens (100, 200, 300, 400, 500), comprising:
a central optical area (10) having a center point (O);
a first annular optical area (20) surrounding the central optical area (10);
a second annular optical area (30) surrounding the first annular optical area (20);
a third annular optical area (40) surrounding the second annular optical area (30);
wherein the ophthalmic lens (100, 200, 300, 400, 500) is defined with two first refractive correction areas (A1, A2, A3, A4, A5), a second refractive correction area (B1, B2, B3, B4, B5), and a third refractive correction area (C1, C2, C3, C4, C5); the two first refractive correction areas (A1, A2, A3, A4, A5), the second refractive correction area (B1, B2, B3, B4, B5), and the third refractive correction area (C1, C2, C3, C4, C5) are selectively disposed in any of the central optical area (10), the first annular optical area (20), the second annular optical area (30), and the third annular optical area (40); the ophthalmic lens (100, 200, 300, 400, 500) has a dioptric power profile, wherein the dioptric power profile presents a horizontal line in each of the two first refractive correction areas (A1, A2, A3, A4, A5); the dioptric power profile presents a wavy curve in the second refractive correction area (B1, B2, B3, B4, B5) and the third refractive correction area (C1, C2, C3, C4, C5); the dioptric power profile has at least one peak in each of the second refractive correction area (B1, B2, B3, B4, BS) and the third refractive correction area (C1, C2, C3, C4, C5);
wherein the ophthalmic lens (100, 200, 300, 400, 500) satisfies: 3.5 mm≤Z1+Z2+Z3+Z4≤5.0 mm; Z1 is a distance between the center point (O) and a boundary of the central optical area (10); Z2 is a distance between the boundary of the central optical area (10) and a boundary of the first annular optical area (20); Z3 is a distance between the boundary of the first annular optical area (20) and a boundary of the second annular optical area (30); Z4 is a distance between the boundary of the second annular optical area (30) and a boundary of the third annular optical area (40).

2. The ophthalmic lens (200, 300, 500) as claimed in claim 1, wherein the two first refractive correction areas (A2, A3, A5) are respectively located in two of the central optical area (10), the first annular optical area (20), the second annular optical area (30), and the third annular optical area (40); the second refractive correction area (B2, B3, B5) and/or the third refractive correction area (C2, C3, C5) are/is arranged between the two first refractive correction areas (A2, A3, A5).

3. The ophthalmic lens (100) as claimed in claim 1, wherein the two first refractive correction areas (A1) are adjacently arranged and are respectively located in two of the central optical area (10), the first annular optical area (20), the second annular optical area (30), and the third annular optical area (40); the second refractive correction area (B1) or the third refractive correction area (C1) is arranged on a side of one of the two first refractive correction areas (A1).

4. The ophthalmic lens (400) as claimed in claim 1, wherein the two first refractive correction areas (A4) are adjacently arranged and are respectively located in the first annular optical area (20) and the second annular optical area (30); the second refractive correction area (B4) and the third refractive correction area (C4) are respectively located in the central optical area (10) and third annular optical area (40); the two first refractive correction areas (A4) are arranged between the second refractive correction area (B4) and the third refractive correction area (C4).

5. The ophthalmic lens (100, 200, 300, 400, 500) as claimed in any one of claim 1 to claim 4, wherein the ophthalmic lens (100, 200, 300, 400, 500) satisfies: -1.00 D≤PPSD≤1.00 D; PPSD is a dioptric power of each of the two first refractive correction areas (A1, A2, A3, A4, A5).

6. The ophthalmic lens (100, 200, 300, 400, 500) as claimed in any one of claim 1 to claim 4, wherein the ophthalmic lens (100, 200, 300, 400, 500) satisfies: -3.00 D≤PPSD-PPS1≤3.00 D; PPSD is a dioptric power of each of the two first refractive correction areas (A1, A2, A3, A4, A5); PPS1 is a peak dioptric power of the second refractive correction area (B1, B2, B3, B4, B5).

7. The ophthalmic lens (100, 200, 300, 400, 500) as claimed in any one of claim 1 to claim 4, wherein the ophthalmic lens (100, 200, 300, 400, 500) satisfies: -4.00 D≤PPS1-PPS2≤4.00 D; PPS1 is a peak dioptric power of the second refractive correction area (B1, B2, B3, B4, B5); PPS2 is a peak dioptric power of the third refractive correction area (C1, C2, C3, C4, C5).

8. The ophthalmic lens (100, 200, 300, 400, 500) as claimed in any one of claim 1 to claim 4, wherein the dioptric power profile has a plurality of first peaks (S1) and a plurality of first valleys (T1) in the second refractive correction area (B1, B2, B3, B4, B5); the ophthalmic lens (100, 200, 300, 400, 500) satisfies: 1.00 D≤ |PPS1-PPT1|≤4.00 D; PPS1 is a peak dioptric power of each of the plurality of first peaks (S1) in the second refractive correction area (B1, B2, B3, B4, B5); PPT1 is a valley dioptric power of each of the plurality of first valleys (T1) in the second refractive correction area (B1, B2, B3, B4, B5).

9. The ophthalmic lens (100, 200, 300, 400, 500) as claimed in any one of claim 1 to claim 4, wherein the dioptric power profile has a plurality of second peaks (S2) and a plurality of second valleys (T2) in the third refractive correction area (C1, C2, C3, C4, C5); the ophthalmic lens (100, 200, 300, 400, 500) satisfies: 1.00 D≤|PPS2-PPT2|≤4.00 D; PPS2 is a peak dioptric power of each of the plurality of second peaks (S2) in the third refractive correction area (C1, C2, C3, C4, C5); PPT2 is a valley dioptric power of each of the plurality of second valleys (T2) in the third refractive correction area (C1, C2, C3, C4, C5).

10. The ophthalmic lens (100, 200, 300, 400, 500) as claimed in claim 1, wherein the ophthalmic lens (100, 200, 300, 400, 500) satisfies: 0.25 mm≤Z1≤1.4 mm; Z1 is the distance between the center point (O) and the boundary of the central optical area (10).

11. The ophthalmic lens (100, 200, 300, 400, 500) as claimed in claim 1, wherein the ophthalmic lens (100, 200, 300, 400, 500) satisfies: 0.25 mm≤Z2≤1.4 mm; Z2 is the distance between the boundary of the central optical area (10) and the boundary of the first annular optical area (20).

12. The ophthalmic lens (100, 200, 300, 400, 500) as claimed in claim 1, wherein the ophthalmic lens (100, 200, 300, 400, 500) satisfies: 0.25 mm≤Z3≤1.4 mm; Z3 is the distance between the boundary of the first annular optical area (20) and the boundary of the second annular optical area (30).

13. The ophthalmic lens (100, 200, 300, 400, 500) as claimed in claim 1, wherein the ophthalmic lens (100, 200, 300, 400, 500) satisfies: 0.25 mm≤Z4≤1.4 mm; Z4 is the distance between the boundary of the second annular optical area (30) and the boundary of the third annular optical area (40).
